# FASCICULE DE BREVET EUROPEEN

(11) **EP 2 370 293 B1**
(45) Date de publication et mention de la délivrance du brevet: **27.03.2013**
(21) Numéro de dépôt: 09797102.2
(22) Date de dépôt: 26.11.2009
(51) Int. Cl.: B60P 3/00, B62D 21/02, B62D 27/02

(54) **MODULE POUR CHASSIS MODULAIRE DE VEHICULE DE TRANSPORT DE CHARGES LOURDES**
MODUL FÜR DEN MODULAREN RAHMEN EINES SCHWERLAST-TRANSPORTERS
MODULE FOR THE MODULAR FRAME OF A HEAVY-DUTY VEHICLE

(30) Priorité: 16.12.2008 FR 0858657
(43) Date de publication de la demande: 05.10.2011
(73) Titulaire: Envision Vehicle Engineering Novasio Technology Event, 70400 Hericourt (FR)
(72) Inventeur: GAUSSIN, Christophe, 1093 La Conversion (CH); CHAU, Pho-Trung, 70400 Hericourt (FR); FENIX, Reginald, 70400 Champey (FR)
(74) Mandataire: Rhein, Alain
(86) Numéro de dépôt international: PCT/FR2009/052315
(87) Numéro de publication internationale: WO 2010/076442

(56) Documents cités:
- EP-A- 1 318 064
- EP-A- 1 588 929
- US-A1- 2004 056 468

## Description

La présente invention concerne un module pour châssis modulaire de véhicule de transport de charges lourdes. Un tel module est connu de EP1318064 A.

L'invention concerne encore un procédé de montage de tels modules.

L'invention concerne encore un châssis modulaire de véhicule de transport de charges lourdes comportant au moins deux de tels modules.

L'invention concerne encore un véhicule portuaire comportant au moins un tel châssis ou au moins un tel module.

La présente invention concerne plus particulièrement le domaine de la manutention lourde, et en particulier de la manutention portuaire.

L'évolution de la manutention portuaire se caractérise par l'emport, sur un même navire, de charges toujours plus importantes. En particulier, les conteneurs représentent l'essentiel de la charge marchande transportée autrement qu'en vrac. L'immobilisation d'un navire au quai coûte cher, et les moyens de manutention doivent être adaptés pour l'évacuation ou l'apport le plus rapide possible de l'ensemble de la charge que doit emporter ou déposer un navire lors d'une escale.

Un prestataire de services portuaires est contraint d'adapter sa flotte de manutention au sol à l'évolution de la nature de la charge. Cette charge est généralement constituée par des conteneurs de type maritime, les plus courants de longueur 20, 30, 40, 45 pieds, parmi les standards connus de 8, 10, 15, 20, 30, 40, 45, 48, 50, 53 , voire 60 pieds. Le volume d'un conteneur de 20 pieds sert aujourd'hui d'unité de mesure de comparaison, sous le vocable EVP, ou équivalent 20 pieds.

Des charges spéciales peuvent être constituées par des ensembles de grande dimension, tant en longueur qu'en largeur et hauteur, et, dans certains cas, de masse très élevée. Le prestataire de services ne peut disposer de véhicules spéciaux dans chaque cas de figure, et doit envisager l'adaptation ou/et la combinaison de moyens polyvalents dont il dispose.

On connaît, dans le transport routier de véhicules ou de grumes, des semi-remorques télescopiques, de type surbaissé ou à poutre unique. Ces véhicules sont toutefois mal adaptés au transport de charges lourdes et de centrage très variable, comme peuvent notamment l'être des conteneurs, un simple conteneur de 20 pieds pouvant, selon la norme NF ISO 668, avoir une masse totale encharge de 34800 kg. Le jumelage de tels conteneurs est fréquent. Les palonniers dits spreaders qui effectuent le chargement/déchargement des navires à quai sont déjà capables de transporter au moins quatre conteneurs disposés en deux rangées de deux, ce qui peut, avec de petits conteneurs de 20 pieds, représenter une charge d'environ 140 tonnes, ce qui n'est plus compatible avec un système télescopique de poutres coulissantes les unes dans les autres, telles que connues de l'état de la technique. En effet, en manutention lourde et notamment portuaire, il est généralement recherché de disposer la charge le plus près possible du sol, pour des raisons de sécurité évidentes, ce qui interdit un sur-dimensionnement des châssis des véhicules et remorques.

Il est, encore, connu de constituer des châssis de remorques modulaires à la façon de ponts de campagne du génie, les modules étant constitués de caissons prismatiques assemblés bout à bout à bord droit. Là encore se pose du dimensionnement pour la résistance à la flexion, souvent estimé de façon empirique ce qui se traduit par des sections importantes, une grosse consommation d'acier, et un poids élevé, ce qui grève les performances énergétiques de l'ensemble tracteur-remorque ou du train de remorques si c'est le cas. Cette conception pose, encore, le problème de la résistance au cisaillement des pièces de liaison, en particulier de la boulonnerie.

L'invention a pour but de permettre à un prestataire de services portuaires l'adaptation de sa flotte de manutention au sol à l'évolution de la nature de la charge. L'invention se propose, encore, de faciliter la maintenance de son parc de matériel roulant.

A cet effet, l'invention concerne un module pour châssis modulaire de véhicule de transport de charges lourdes, caractérisé en ce qu'il comporte à au moins une de ses extrémités une surface de jonction qui comporte au moins une surface d'appui oblique s'étendant entre deux surfaces planes parallèles l'une à l'autre et inclinées par rapport à ladite surface d'appui oblique.

L'invention concerne encore un procédé de montage de tels modules.

L'invention concerne encore un châssis modulaire de véhicule de transport de charges lourdes comportant au moins deux modules comportant chacun à au moins une extrémité une surface de jonction conçue apte à coopérer avec une surface de jonction complémentaire que comporte un autre module, caractérisé par le fait que ladite surface de jonction et ladite surface de jonction complémentaire constituent ensemble un assemblage à trait de Jupiter oblique, à sifflet désabouté ou à clé.

Selon une caractéristique de l'invention, ledit châssis est dimensionné pour l'emport de conteneurs maritimes de 8, 10, 15, 20, 30, 40, 45, 48, 50, 53 ou 60 pieds.

L'invention concerne encore un véhicule portuaire comportant au moins un tel châssis, ou au moins un tel module.

Selon une caractéristique de l'invention, ce véhicule est une remorque ou une semi-remorque.

D'autres caractéristiques et avantages de l'invention ressortiront de la description détaillée qui va suivre des modes de réalisation non limitatifs de l'invention, en référence aux figures annexées dans lesquelles :
- la figure 1 représente, de façon schématisée et en perspective, une vue éclatée d'un châssis comportant des modules selon l'invention;
- la figure 2 représente, de façon schématisée et en élévation, une première variante d'assemblage de tels modules;
- la figure 3 représente, de façon schématisée et en élévation, une seconde variante d'assemblage de tels modules;

- la figure 4 représente, de façon schématisée, partielle et en élévation, un exemple de combinaison de modules, dans une direction longitudinale, similaire à la figure 1 ;
- la figure 5 représente, de façon schématisée, partielle et en élévation, un autre exemple de combinaison de modules;
- la figure 6 représente, de façon schématisée, partielle et en élévation, un exemple de combinaison de deux modules;
- les figures 7 et 8 représentent, de façon schématisée, partielle et en élévation, d'autres exemples encore de combinaison de modules;
- la figure 9 représente, de façon schématisée et en perspective, une combinaison de modules dans une direction transversale ;
- la figure 10 est une vue de bout de la combinaison de la figure 9;
- la figure 11 représente, de façon schématisée et en perspective vue par le dessous, un détail d'un module selon l'invention ;
- la figure 12 représente, de façon schématisée et en perspective vue par le dessus, un autre détail d'un module selon l'invention ;
- la figure 13 représente, de façon schématisée et en perspective vue par le dessus, un autre détail encore d'un module selon l'invention ;
- les figures 14, 15, et 16 représentent de façon schématisée, respectivement un automoteur, une semi-remorque, et une remorque de transport de conteneurs selon l'invention.

La présente invention concerne plus particulièrement le domaine de la manutention lourde, et en particulier de la manutention portuaire.

L'invention concerne un module 10 pour châssis 1 modulaire de véhicule 100 de transport de charges lourdes.

Un tel module 10 peut prendre différentes formes, tel que visible dans la suite de l'exposé, avec des exemples de modules 10 sous les références 2, 3, 4, 200, 201, 202, 300, 400, 401.

Selon l'invention, afin de garantir à la fois le meilleur comportement en flexion du châssis 1 de véhicule 100 constitué avec de tels modules 10, un module 10 comporte à au moins une de ses extrémités une surface de jonction 12 qui comporte au moins une surface d'appui oblique 13 s'étendant entre deux surfaces planes 14 et 15 parallèles l'une à l'autre et inclinées par rapport à ladite surface d'appui oblique 13.

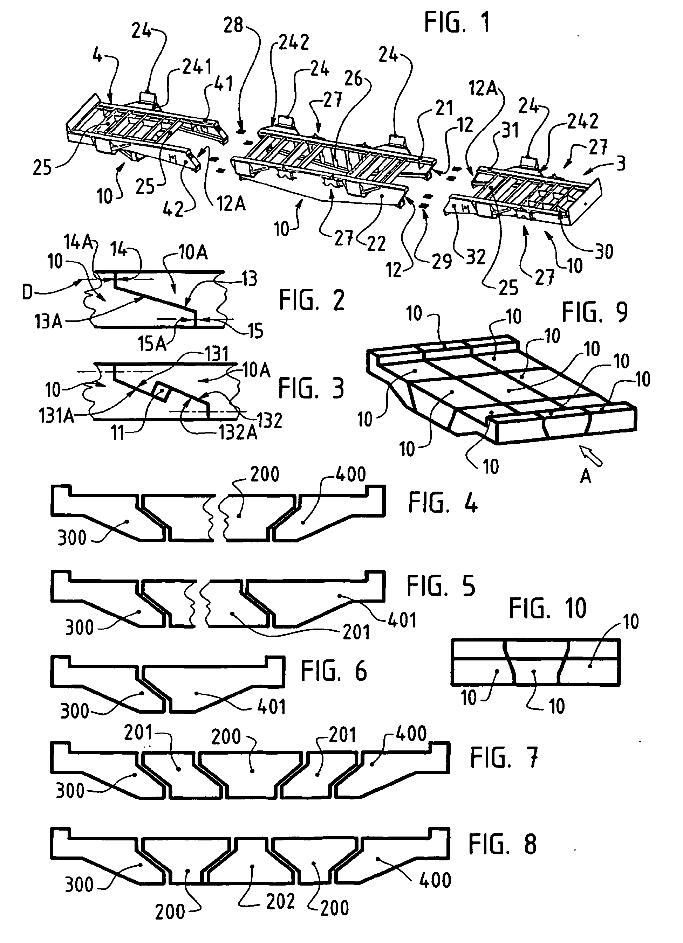

Un tel module 10 est conçu apte à coopérer avec, selon le cas, une structure à laquelle on le rattache, ou bien avec un autre module 10A, ladite structure ou ledit autre module 10A comportant une surface de jonction complémentaire 12A qui comporte au moins une surface d'appui oblique 13A complémentaire s'étendant entre deux surfaces planes complémentaires 14A et 15A parallèles l'une à l'autre et inclinées par rapport à ladite surface d'appui oblique 13A, tel que visible sur la figure 2, le module 10 constituant alors avec ladite structure ou avec ledit autre module 10A un assemblage à trait de Jupiter oblique, dit à sifflet désabouté.

La charge appliquée sur le module 10A est encaissée par la surface oblique 13, un tel assemblage, qui n'est utilisé qu'en charpente bois, et qui est ici introduit de façon innovante en construction métallique, procurant une très bonne résistance à la flexion. Un tel assemblage est conçu pour tenir, en statique, sous l'effet du poids de chacun des composants, et des efforts qui leurs sont appliqués parallèlement aux plans de leurs surfaces planes 14, 14A, 15 et 15A. Les véhicules 100 étant destinés à évoluer sur des sols accidentés, et à effectuer des virages, il est néanmoins nécessaire de rajouter une fixation mécanique, ne serait-ce que pour assurer le maintien transversal. A cet effet, des éléments d'assemblage tels que boulons ou similaire se déploient selon une direction D perpendiculaire aux plans des surfaces planes 14, 14A, 15 et 15A, et au niveau de ces dernières. L'assemblage en trait de Jupiter permet de faire fonctionner ces éléments d'assemblage uniquement en traction, sans effort de cisaillement.

La figure 3 illustre une variante d'assemblage en trait de Jupiter à clé : la surface de jonction 12 comporte alors deux surfaces d'appui oblique 131 et 132, parallèles l'une à l'autre, la surface de jonction 12A comporte de même deux surfaces d'appui oblique 131A et 132A, parallèles l'une à l'autre. La longueur de la surface 132 est inférieure à celle de la surface 132A, la longueur de la surface 131A est inférieure à celle de la surface 131. Ainsi est dégagé, en partie médiane de l'assemblage, un espace conçu apte à recevoir une clé 11 solidarisant l'assemblage dénommé trait de Jupiter oblique à clé. Une telle clé 11 améliore le comportement en traction de l'assemblage abouté. Elle permet, encore, dans certains cas, de se passer de visserie d'assemblage. Une telle clé 11 peut être à faces parallèles, eu encore en forme de coin.

L'invention concerne encore un châssis 1 modulaire de véhicule de transport de charges lourdes comportant au moins deux tel modules 10 comportant chacun à au moins une extrémité une surface de jonction conçue apte à coopérer avec une surface de jonction complémentaire que comporte un autre module. Dans ce châssis 1, selon l'invention, ladite surface de jonction et ladite surface de jonction complémentaire constituent ensemble un assemblage à trait de Jupiter oblique, à sifflet désabouté ou à clé. Un tel châssis modulaire 1 permet en particulier la construction de véhicules 100, en particulier portuaires, permettant de transporter des conteneurs ISO. Un tel châssis 1 est naturellement utilisable pour d'autres applications, en raison de sa grande polyvalence.

Les figures 4 à 8 présentent plusieurs types de modules 10, et plusieurs combinaisons envisageables, en fonction en particulier de la nature de la charge à transporter, et de la répartition de ses masses.

La figure 4 illustre la configuration préférée, avec un module intermédiaire 200 d'un premier type encadré par des modules d'extrémité d'un premier type 300 et 400, le module intermédiaire 200 formant alors clé de voûte. Le module 400 peut notamment être identique au module 300. La figure 7 en illustre une variante rallongée, avec des modules de rallongement 201 dont les surfaces obliques sont parallèles entre elles.

La figure 6 illustre une autre variante, combinant un module d'extrémité du premier type 300, et un module d'extrémité d'un second type 401, dont la surface de jonction 12 est complémentaire à celle du module d'extrémité du premier type 300. La figure 5 en illustre une variante rallongée, avec interposition d'un module de rallongement 201.

La figure 8 illustre une autre variante, incorporant un module intermédiaire 202 d'un second type dont chacune des surfaces de jonction 12 est complémentaire à celle du module d'extrémité du premier type 300. Cet exemple combine un module intermédiaire 202 d'un second type encadré par deux modules intermédiaires 200 d'un premier type, eux-mêmes encadrés par des modules d'extrémité d'un premier type 300 et 400.

On comprend que de nombreuses configurations sont réalisables, avec un nombre de types de modules réduit, ici limité à cinq dans le cadre de ces exemples.

Un châssis 1 selon l'invention comporte plusieurs modules 10 raboutés. On comprend que, si le raboutage dans le sens de la longueur dit longitudinal, tel que visible sur la figure 1 et sur les figures 4 à 8, constitue l'application préférée, le châssis 1 peut également être composé de plusieurs modules raboutés dans le sens de la largeur dit transversal, tel que visible sur la figure 9 et sur la figure 10 vue selon la direction frontale A, pour l'emport de charges très volumineuses, ou tout simplement pour multiplier par un nombre entier la capacité d'emport de conteneurs. Un véhicule 100 peut ainsi comporter un châssis 1 matriciel, avec des éléments raboutés à la fois en longueur et en largeur, tel celui de la figure 9.

La même organisation de l'espace est également possible selon la troisième dimension de la hauteur, qui présente un intérêt, en milieu portuaire ou dans le domaine de la manutention de charges très lourdes, en particulier pour agir sur la répartition de charges sur les essieux porteurs ou/et moteurs, et notamment par l'emport de lest disposé dans des zones judicieuses de la structure du véhicule. Ce lest est, de préférence, chargé au-dessus d'un châssis 1 de base, et peut lui-même résulter d'un empilage de plusieurs plaques de lest.

En somme, le châssis 1 selon l'invention peut comporter une modularité tridimensionnelle.

De façon préférée, et tel que visible sur la figure 1, le module 10 comporte au moins deux longerons 21 et 22, notamment à profil en U à section variable optimisée pour la résistance mécanique, dans une direction longitudinale. Le module 10 comporte avantageusement au moins un sous-module traverse 24 pour la réception de la charge dans une direction transversale, lesdits longerons et traverse constituant un ensemble caisson rigide en flexion et torsion.

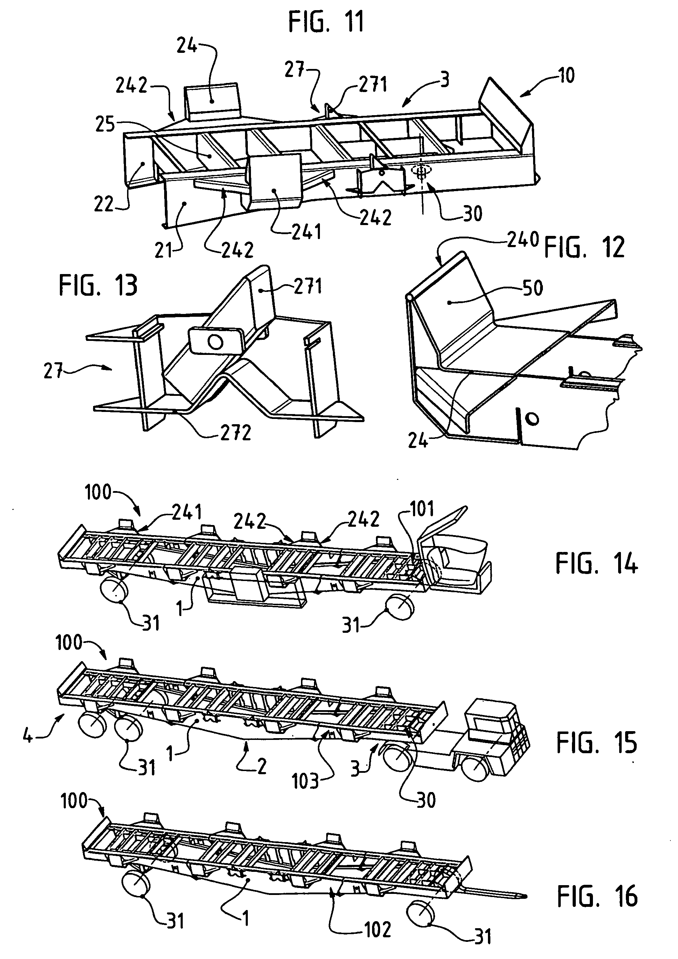

Le sous-module traverse 24 s'assemble sur les longerons 21 et 22 par une connexion mécanique du type type à mi-fer. Le sous-module traverse 24 permet d'assurer la fonction de guidage et de retenue de la charge, notamment de conteneurs, sur le châssis 1, et constitue un vé de centrage en même temps que des moyens d'arrêt au niveau de cales pentées 50. Ces dernières sont terminées à leur extrémité supérieure ou tournée vers la charge, par des zones rayonnées, obtenues soit par formage de tôle, soit par des tubes ou ronds rapportés 240, de façon à permettre un contact non-agressif entre le sous-module traverse 24 et les conteneurs, tel que visible sur la figure 12. Les parties en déport, par rapport aux longerons 21 et 22, du sous-module traverse 24 constituent des bras 241 ; ces derniers et les cales pentées 50 sont avantageusement réalisés selon la demande FR 07 59762 FR2.919 546 du même déposant.

De façon innovante et avantageuse, les zones les plus saillantes du châssis 1, qui sont généralement constituées par de tels bras 241 s'étendant vers l'extérieur du châssis, de sous-modules traverses 24, sont protégées, de préférence de part et d'autre, par des pare-chocs obliques 242. Ces derniers, de conception rigide en forme de glissière, sont conçus aptes à dévier le module 10 lors d'une collision avec un obstacle, et permettent, alors de dévier la trajectoire du véhicule 100 incorporant un tel module 10 hors de l'obstacle. Ils constituent de surcroît des moyens de rigidification des bras 241 dans un plan horizontal. Le module 10 comporte aussi des traverses 25 et des goussets 26 pour assurer sa rigidité.

Le module 10 comporte de préférence des sous-modules bloqueurs inertiels 27, comportant chacun au moins une butée mobile 271 qui est conçue apte à venir en appui sur une butée fixe 272, tels que visibles sur la figure 13. Avantageusement, ces modules 27 sont réalisés selon la demande FR 07 56916 /FR 2 919 542 du même déposant.

Le châssis 1 selon l'invention comporte au moins deux modules. Sur un exemple particulier de réalisation tel que visible sur la figure 1, le châssis 1 constitue la structure d'une semi-remorque portuaire 103 telle que visible sur la figure 15, qui comporte trois modules :
- un premier module d'extrémité 3 :
- un deuxième module d'extrémité 4;
- un module de liaison intermédiaire 2.

Le module 2 de la figure 1 comporte deux longerons 21 et 22, et deux sous-modules traverses 24. Ce module 2 particulier, dit intermédiaire, comporte quatre surfaces de jonction 12, aux extrémités 28 des longerons 21 et 22. L'assemblage des modules 3 et 4 sur le module 2 est réalisé au niveau de ces extrémités 28 en utilisant des éléments d'assemblage 29 tels que boulons ou similaires. Les formes spécifiques surfaces de jonction 12 et des surfaces de jonction complémentaires 12A que comportent les modules antagonistes permettant l'imbrication précise et rigide des modules 2, 3 et 4 les uns par rapport aux autres et évitent toute contrainte de cisaillement dans les éléments d'assemblage 29. Ces derniers peuvent, selon le type de sollicitation de l'ensemble châssis constitué par l'assemblage des modules, être montés, tels que visible sur les figures, parallèlement à la direction d'élongation de ce châssis, ou bien dans la direction perpendiculaire à cette même direction.

De façon similaire, le module d'extrémité 3 de l'exemple de la figure 1 comporte deux longerons 31 et 32 de type similaire aux longerons 21 et 22, et un sous-module 24. Le module 3 comporte également des traverses 25, et des sous-modules bloqueurs inertiels 27. Le module 3 de cet exemple comporte une structure caissonnée, à son extrémité opposée à celle de son assemblage avec le module 2, pour supporter les charges engendrées par un pivot d'attelage 30, tel que visible sur la figure 11. Ce module 3 comporte des surfaces de jonction complémentaires 12A conçues aptes à coopérer avec les surfaces de jonction 12 du module 2.

Le module d'extrémité 4 de l'exemple de la figure 1 comporte deux longerons 41 et 42 de type similaire aux longerons 21 et 22, et comporte une structure caissonnée, à son extrémité opposée à celle de son assemblage avec le module 2, pour supporter les charges engendrées par au moins un essieu 31, tel que visible sur la figure 15. Ce module 4 comporte des surfaces de jonction complémentaires 12A conçues aptes à coopérer avec les surfaces de jonction 12 du module 2.

De préférence, le châssis 1 composé par des modules de type 10 est dimensionné pour l'emport de conteneurs maritimes ISO de 8, 10, 15, 20, 30, 40, 45, 48, 50, 53 ou 60 pieds. A cet effet, les modules de type 10 sont avantageusement dimensionnés en longueur chacun pour recevoir un sous-multiple, ou la valeur exacte, ou un multiple, de la longueur de conteneurs normalisés. De façon préférée, ils sont dimensionnés en longueur chacun pour recevoir un sous-multiple, ou la valeur exacte, ou un multiple, d'un conteneur de 20 pieds normalisé ISO 668. Les modules 10 sont, préférentiellement, équipés pour recevoir des butées en longueur pour l'arrêt longitudinal des conteneurs, ou incorporent de telles butées par construction. Avantageusement, ces butées longitudinales sont également constituées par des sous-modules bloqueurs 27.

De façon innovante et particulièrement avantageuse, au moins un module 10 comporte de tels modules sous-bloqueurs 27 conçus aptes à agir selon une direction transversale du module 10, et de préférence du châssis 1, et non seulement dans la direction longitudinale correspondant à la longueur des conteneurs. En somme, le module 10 comporte des modules sous-bloqueurs 27 conçus aptes à agir, certains selon une direction longitudinale du module 10, et d'autres selon une direction transversale du module 10, ces derniers non représentés sur les figures. Ceci est particulièrement intéressant si le module 10 est conçu pour la réception de plusieurs conteneurs côte à côte dans le sens transversal, notamment pour recevoir directement la charge d'un palonnier dit spreader multi-conteneurs.

L'invention concerne encore un véhicule portuaire 100 comportant au moins un châssis 1, ou au moins un tel module 10. Ce véhicule 100 peut être, selon le cas, un automoteur 101 transporteur de conteneurs tel que visible en figure 14, une remorque portuaire 102 pour le transport de conteneurs telle que visible en figure 16, ou une semi-remorque 103 pour le transport de conteneurs telle que visible en figure 15, ces exemples de combinaisons de modules n'étant nullement limitatifs.

L'invention concerne encore un procédé d'assemblage de tels modules 10 deux à deux, selon lequel on présente bout à bout deux modules 10 pour mettre en coopération une surface de jonction 12 que comporte l'un avec une surface de jonction complémentaire 12A que comporte l'autre, de façon à ce que ladite surface de jonction 12 et ladite surface de jonction complémentaire 12A constituent ensemble un assemblage à trait de Jupiter oblique, à sifflet désabouté ou à clé 11, et qu'on solidarise ensuite lesdits modules 10 avec au moins une clé 11 ou/et des moyens d'assemblage 29.

Chaque module 10 comporte avantageusement des moyens de repérage ou/et d'alignement pour faciliter sa présentation face à un autre module 10 et son assemblage avec ce dernier. Dans une première variante, le module 10 comporte au moins deux alésages, respectivement tourillons, au voisinage de la surface de jonction 12 et tournés vers l'extérieur du module, qui sont conçus aptes à coopérer avec au moins deux tourillons, respectivement deux alésages, que comporte l'outillage de montage. Dans une autre variante, combinable avec la précédente, les moyens de repérage ou/et d'alignement sont constitués par au moins une surface conçue apte à recevoir la charge. Avantageusement, cette surface est complétée par une surface qui lui est perpendiculaire dirigée vers l'extérieur du module et au niveau de la surface de jonction que comporte el module.

L'invention permet d'envisager tous types de chargement, y compris le vrac, par l'emport de bennes adaptées, lesquelles peuvent également être modulaires, ou encore de citernes, lesdites bennes ou citernes accessoires de l'invention étant avantageusement réalisées avec une semelle d'appui de dimensions identiques à celles d'un conteneur normalisé ISO.

A ce propos, les dimensions en pieds sont d'utilisation usuelle dans le domaine des conteneurs, et figurent dans les normes françaises telles que NF ISO 668. Le lecteur trouvera ci-après des valeurs approchées métriques, avec une décimale, des dimensions citées dans la présente demande :
8 pieds: 2,4 m
10 pieds: 3,0 m
15 pieds: 4,6 m
20 pieds: 6,1m
30 pieds: 9,1 m
40 pieds: 12,2 m
45 pieds: 13,7 m
48 pieds: 14,6 m
53 pieds: 16,2 m
60 pieds: 18,3 m.

## Revendications

1. Module (10) pour châssis (1) modulaire de véhicule (100) de transport de charges lourdes, **caractérisé en ce qu'**il comporte à au moins une de ses extrémités une surface de jonction (12) qui comporte au moins une surface d'appui oblique (13) s'étendant entre deux surfaces planes (14, 15) parallèles l'une à l'autre et inclinées par rapport à ladite surface d'appui oblique (13).

2. Module (10) selon la revendication précédente, **caractérisé en ce qu'**il comporte au moins deux longerons (21,22) à profil en U à section variable optimisée pour la résistance mécanique dans une direction longitudinale, et au moins un sous-module traverse (24) pour la réception de la charge dans une direction transversale, lesdits longerons et traverse constituant un ensemble caisson rigide en flexion et torsion.

3. Module (10) selon la revendication précédente, **caractérisé en ce que** ledit sous-module traverse (24) constitue un vé de centrage de la charge en même temps que des moyens d'arrêt au niveau de cales pentées (50), terminées à leur extrémité supérieure ou tournée vers la charge, par des zones rayonnées constituées par des tubes ou ronds rapportés (240).

4. Module (10) selon la revendication précédente, **caractérisé en ce que** ledit sous-module traverse (24) comporte des bras (241) saillant en déport vers l'extérieur par rapport auxdits longerons (21, 22), et qui sont protégés, de part et d'autre, par des pare-chocs obliques (242) en forme de glissières conçus aptes à dévier ledit module (10) lors d'une collision avec un obstacle.

5. Module (10) selon la revendication précédente, **caractérisé en ce que** lesdits pare-chocs obliques (242) constituent des moyens de rigidification desdits bras (241) dans un plan horizontal.

6. Module (10) selon l'une des revendications précédentes, **caractérisé en ce qu'**il comporte des sous-modules bloqueurs inertiels (27), comportant chacun au moins une butée mobile (271) est conçue apte à venir en appui sur une butée fixe (272).

7. Module (10) selon la revendication précédente, **caractérisé en ce qu'**il comporte de tels modules sous-bloqueurs (27) conçus aptes à agir, certains selon une direction longitudinale dudit module (10), et d'autres selon une direction transversale dudit module (10).

8. Procédé d'assemblage deux à deux de modules selon l'une des revendications 1 à 7, **caractérisé par le fait que** on présente bout à bout deux modules (10) pour mettre en coopération une surface de jonction (12) que comporte l'un avec une surface de jonction complémentaire (12A) que comporte l'autre, de façon à ce que ladite surface de jonction (12) et ladite surface de jonction complémentaire (12A) constituent ensemble un assemblage à trait de Jupiter oblique, à sifflet désabouté ou à clé (11), et qu'on solidarise ensuite lesdits modules (10) avec au moins une clé (11) ou/et des moyens d'assemblage (29).

9. Châssis (1) modulaire de véhicule (100) de transport de charges lourdes comportant au moins deux modules (10) selon l'une des revendications 1 à 7 comportant chacun à au moins une extrémité une surface de jonction (12) conçue apte à coopérer avec une surface de jonction complémentaire (12A) que comporte un autre module, **caractérisé par le fait que** ladite surface de jonction (12) et ladite surface de jonction complémentaire (12A) constituent ensemble un assemblage à trait de Jupiter oblique, à sifflet désabouté ou à clé (11).

10. Châssis (1) selon la revendication 9, **caractérisé par le fait qu'**il est dimensionné pour l'emport de conteneurs maritimes ISO de 8, 10, 15, 20, 30, 40, 45, 48, 50, 53 ou 60 pieds.

11. Châssis (1) selon la revendication 9 ou 10, **caractérisé par le fait que** les modules (10) qu'il comporte sont dimensionnés en longueur chacun pour recevoir un sous-multiple, ou la valeur exacte, ou un multiple, d'un conteneur de 20 pieds normalisé ISO 668.

12. Véhicule portuaire (100) comportant au moins un châssis (1) selon l'une des revendications 9 à 11, ou au moins un module (10) selon l'une des revendications 1 à 7.

13. Véhicule portuaire (100) selon la revendication 12, **caractérisé par le fait qu'**il constitue un automoteur (101) transporteur de conteneurs, ou une remorque portuaire (102) pour le transport de conteneurs, ou une semi-remorque (103) pour le transport de conteneurs.

## Claims

1. Module (10) for the modular frame (1) of a heavy duty vehicle (100), wherein the module includes, at least at one of its ends, a joining surface (12), which includes at least an oblique resting surface (13) extending between two flat surfaces (14, 15) parallel to each other and inclined with respect to said oblique resting surface (13).

2. Module (10) according to the preceding claim, wherein the module includes at least two longitudinal beams (21, 22) having a U-shaped profile and a varying cross-section optimized for the mechanical strength in a longitudinal direction, and at least one transverse sub-module (24) for receiving the load in a transversal direction, said longitudinal beams and transverse beam forming a box-type unit that is rigid in flexion and torsion.

3. Module (10) according to the preceding claim, wherein said transverse sub-module (24) forms a V-shaped element for centering the load and simultaneously stopping means at the level of oblique wedges (50) terminated, at their upper end or end oriented towards the load, by curved areas formed by applied tubes or round bars (240).

4. Module (10) according to the preceding claim, wherein said transverse sub-module (24) includes arms (241) protruding offset outwardly with respect to said longitudinal beams (21, 22), and protected on both sides by oblique bumpers (242) in the form of slides designed capable of deviating said module (10) at the moment of a collision with an obstacle.

5. Module (10) according to the preceding claim, wherein said oblique bumpers (242) form means for rigidifying said arms (241) in a horizontal plane.

6. Module (10) according to one of the preceding claims, wherein the module includes inertia-blocking sub-modules (27) each including at least one movable stop (271) designed capable of resting on a fixed stop (272).

7. Module (10) according to the preceding claim, wherein the module includes such locking sub-modules (27) designed capable of acting, some in a longitudinal direction of said module (10) and others in a transversal direction of said module (10).

8. Method for assembling two by two modules according to one of the claims 1 to 7, wherein two modules (10) are placed end to end, in order to bring into cooperation a joining surface (12) one of them includes with a complementary joining surface (12A) the other one includes, so that said joining surface (12) and said complementary joining surface (12A) form together an assembly with an oblique scarf joint, with a diagonal cut or with a key (11), and that said modules (10) are then made integral with at least one key (11) and/or assembling means (29).

9. Modular frame (1) of a heavy duty vehicle (100), including at least two modules (10) according to one of claims 1 to 7 each including, at least at one end, a joining surface (12) designed capable of cooperating with a complementary joining surface (12A) another module includes, wherein said joining surface (12) and said complementary joining surface (12A) form together an assembly with an oblique scarf joint, with a diagonal cut or with a key (11).

10. Frame (1) according to claim 9, wherein the frame is dimensioned for loading sea-going ISO containers of 8, 10, 15, 20, 30, 40, 45, 48, 50, 53 or 60 feet.

11. Frame (1) according to claim 9 or 10, wherein the modules (10) it includes are each dimensioned in length to receive a sub-multiple, or the exact value or a multiple of an ISO 668 standardized 20-feet container.

12. Harbor vehicle (100), including at least one frame (1) according to one of the claims 9 to 11 or at least one module (10) according to one of claims 1 to 7.

13. Harbor vehicle (100) according to claim 12, wherein the vehicle constitutes a container-transporting motor vehicle (101) or a harbor trailer (102) for transporting containers or a semi-trailer (103) for transporting containers.

## Patentansprüche

1. Modul (10) für den modularen Rahmen (1) eines Schwerlast-Transporters (100), **dadurch gekennzeichnet, dass** es an zumindest einem von seinen Enden eine Fügefläche (12) umfasst, die zumindest eine schräge Auflagefläche (13) umfasst, die sich zwischen zwei ebenen Oberflächen (14, 15) erstreckt, die untereinander parallel sind und hinsichtlich der besagten schrägen Auflagefläche (13) geneigt verlaufen.

2. Modul (10) nach dem vorgehenden Anspruch, **dadurch gekennzeichnet, dass** es zumindest zwei U-profilförmige Längsträger (21, 22) mit veränderlichem Querschnitt, der für die mechanische Festigkeit in Längsrichtung optimiert ist, und zumindest ein quertragendes Untermodul (24) für die Aufnahme der Last in einer transversalen Richtung umfasst, wobei die besagten Längsträger und Querträger gemeinsam einen biege- und torsionssteifen Gestellkasten bilden.

3. Modul (10) nach dem vorgehenden Anspruch, **dadurch gekennzeichnet, dass** das besagte quertragende Untermodul (24) ein V-Zentrierelement zum Zentrieren der Last zugleich wie Sperrmittel im Bereich der abgeschrägten Passstücke (50) bildet, die an ihrem oberen oder auf die Last zugewandten Ende durch strahlenförmig gebeugte Bereiche, die durch angebrachte Röhre oder Rundstahlstäbe (240) gebildet sind, abgeschlossen sind.

4. Modul (10) nach dem vorgehenden Anspruch, **dadurch gekennzeichnet, dass** das besagte quertragende Untermodul (24) Querlenker (241) umfasst, die seitwärts nach außen hinsichtlich der besagten Längsträger (21, 22) vorstehen, und die beiderseits durch schräge Stoßfänger (242) in Form von Gleitschienen geschützt sind, die geeignet vorgesehen sind, um das besagte Modul (10) bei einem Zusammenstoß mit einem Hindernis abzulenken.

5. Modul (10) nach dem vorgehenden Anspruch, **dadurch gekennzeichnet, dass** die besagten schrägen Stoßfänger (242) Mittel zur Festigung der besagten Querlenker (241) in einer horizontalen Ebene bilden.

6. Modul (10) nach einem der vorgehenden Ansprüche, **dadurch gekennzeichnet, dass** es trägheitssperrende Untermodule (27) umfasst, die jeweils zumindest einen beweglichen Anschlag (271) umfassen, der geeignet vorgesehen ist, um gegen einen festen Anschlag (272) in Auflage zu kommen.

7. Modul (10) nach dem vorgehenden Anspruch, **dadurch gekennzeichnet, dass** es solche Untersperrmodule (27) umfasst, die geeignet vorgesehen sind, damit manche davon nach einer Längsrichtung des besagten Moduls (10) und andere nach einer Querrichtung des besagten Moduls (10) wirken.

8. Verfahren für die paarweise Montage der Module nach einem der Ansprüche 1 bis 7, **dadurch gekennzeichnet, dass** zwei Module (10) aneinandergefügt werden, damit eine Fügefläche (12), die das eine Modul umfasst, an eine komplementäre Fügefläche (12A), die das andere Modul umfasst, stößt, auf solche Art und Weise, dass die besagte Fügefläche (12) und die besagte komplementäre Fügefläche (12A) gemeinsam eine Anordnung durch schräge Hakenverblattung, durch Überblattung mit geradem Stoß und schrägem Blatt oder durch Zapfenschloss (11) bilden, und dass die besagten Module (10) anschließend mit zumindest einem Zapfenschloss (11) und/oder mit Verbindungsmitteln (29) fest miteinander verbunden werden.

9. Modularer Rahmen (1) eines Schwerlast-Transporters (100), der zumindest zwei Module (10) nach einem der Ansprüche 1 bis 7 umfasst, die jeweils an zumindest einem Ende eine Fügefläche (12) umfassen, die geeignet vorgesehen ist, um mit einer komplementären Fügefläche (12A), die ein anderes Modul umfasst, zusammenzuwirken, **dadurch gekennzeichnet, dass** die besagte Fügefläche (12) und die besagte komplementäre Fügefläche (12A) gemeinsam eine Anordnung durch schräge Hakenverblattung, durch Überblattung mit geradem Stoß und schrägem Blatt oder durch Zapfenschloss (11) bilden.

10. Rahmen (1) nach Anspruch 9, **dadurch gekennzeichnet, dass** er zur Verladung von ISO genormten 8-, 10-, 15-, 20-, 30-, 40-, 45-, 48-, 50-, 53- oder 60-Fuß-Seecontainern bemessen ist.

11. Rahmen (1) nach Anspruch 9 oder 10, **dadurch gekennzeichnet, dass** die Module (10), die er umfasst, längenmäßig jeweils bemessen sind, um ein Untervielfaches oder den exakten Wert oder ein Vielfaches eines gemäß ISO 668 genormten 20- Fuß-Containers aufzunehmen.

12. Hafenfahrzeug (100), umfassend zumindest einen Rahmen (1) nach einem der Ansprüche 9 bis 11 oder zumindest ein Modul (10) nach einem der Ansprüche 1 bis 7.

13. Hafenfahrzeug (100) nach Anspruch 12, **dadurch gekennzeichnet, dass** es einen selbstfahrenden Containertransporter (101) oder einen Hafenlastanhänger (102) für die Beförderung von Seecontainern oder einen Sattelauflieger (103) für die Beförderung von Containern darstellt.
